# EUROPÄISCHE PATENTSCHRIFT

(11) **EP 1 969 697 B1**
(45) Veröffentlichungstag und Bekanntmachung des Hinweises auf die Patenterteilung: **11.04.2012**
(21) Anmeldenummer: 07703590.5
(22) Anmeldetag: 02.01.2007
(51) Int. Cl.: H02K 3/28, H02K 11/04

(54) **Elektrische Maschine, insbesondere Wechselstromgenerator für ein Kraftfahrzeug**
Electric machine, in particular alternator for a motor vehicle
Machine électrique, notamment alternateur pour un véhicule automobile

(30) Priorität: 30.12.2005 DE 102005063271
(43) Veröffentlichungstag der Anmeldung: 17.09.2008
(73) Patentinhaber: ROBERT BOSCH GMBH, 70442 Stuttgart (DE)
(72) Erfinder: WOLF, Gert, 71563 Affalterbach (DE)
(86) Internationale Anmeldenummer: PCT/EP2007/050015
(87) Internationale Veröffentlichungsnummer: WO 2007/077237

(56) Entgegenhaltungen:
- DE-A1- 4 422 622
- DE-A1- 10 209 054

## Beschreibung

Die Erfindung betrifft eine elektrische Maschine, insbesondere Wechselstromgenerator für ein Kraftfahrzeug, mit den im Oberbegriff des Anspruchs 1 genannten Merkmalen.

### Stand der Technik

In Kraftfahrzeugen werden derartige Generatoren zur elektrischen Energieversorgung eingesetzt, beispielsweise um ein Bordnetz zu versorgen und/oder um eine Fahrzeugbatterie aufzuladen.

Die Generatoren sind als 3- oder 6-phasige Generatoren ausgebildet, wobei durch eine Brückenschaltung mit Halbleiterbauelementen bzw. Gleichrichterdioden eine durch ein Drehfeld erzeugte Wechselspannung bzw. phasenversetzte Spannungen in eine Gleichspannung umgewandelt wird.

Je höher die Phasenzahl des Generators ist, umso geringer ist auch das sogenannte Magnetgeräusch des Generators und umso geringer ist auch die Drehmomentwelligkeit. Dieser Vorteil wird jedoch durch eine höhere Anzahl an Halbleiterbauelementen erkauft, so dass auch höhere Kosten für die Brückenschaltung entstehen.

Bei einem 6-phasigen Generator sind zwölf Halbleiterbauelemente bzw. zwölf Leistungshalbleiter erforderlich.

Aus der Offenlegungsschrift DE 44 22 622 ist eine elektrische Maschine mit einem Läufer und einem Ständer bekannt, wobei der Ständer einen Ständerkern mit einer in Nuten des Ständerkems angeordneten Ständerwicklung aufweist, wobei der Ständer den Läufer radial umgibt und zwei unterstützende Lagerschilde vorgesehen sind, und wobei eine ringspulenförmige Erregerwicklung an dem Läufer befestigt ist. Eine Ständerwicklung weist dabei zwölf Wicklungsteilstränge auf, wobei mindestens zwei Wicklungsteilstränge die gleiche elektrische Phasenlage aufweisen und in den gleichen Nuten des Ständers liegen, wobei Wicklungsteilstränge mit einem Phasenwinkel von elektrisch 30° miteinander in Reihe geschaltet sind und somit eine zwölfeckige Ringschaltung bilden.

Aus der Offenlegungsschrift DE 102 09 054 ist eine elektrische Maschine mit einem Rotor und einem Stator bekannt, bei welcher jeder Verknüpfungspunkt einer Ringschaltung einer Ständerwicklung mit einem Wechselstromeingang einer Diodenbrücke verbunden sein muss. Weiterhin ist offenbart, dass auch eine größere Anzahl von Dioden verwendet werden kann.

### Vorteile der Erfindung

Durch die erfindungsgemäße elektrische Maschine gemäß den Merkmalen des Anspruchs 1, insbesondere durch den erfindungsgemäßen Wechselstromgenerator, wird lediglich durch eine Änderung der Wicklungsteilstrangverschaltung das Magnetgeräusch und die Drehmomentwelligkeit verbessert. Es werden weniger Halbleiter bzw. Gleichrichterdioden eingesetzt, was zu einer deutlichen Kosteneinsparung führt.

Die Erfindung beruht auf der Erkenntnis, dass eine erfindungsgemäße Ringverschaltung nicht nur Drehmomentwelligkeit usw. verbessert, sondern auch die Generatorkennlinie nicht ändert. Dies vereinfacht eine Generatorauslegung bzw. die Projektierung. Bei der Ringverschaltung werden Wicklungsstränge zu einem Ring geschaltet. Eine Dreiecksschaltung ist keine Ringverschaltung im Sinne der Erfindung.

Die Wicklungsstränge werden erfindungsgemäß zu einem 12-eckigen Ring verschaltet. Die Drehmomentwelligkeit entspricht etwa einer 12-phasigen Schaltung. Die Brückenschaltung ist für eine Wicklungsanordnung mit insbesondere 3- oder 6-Phasen, und somit eine geringere Phasenzahl (3 oder 6 Phasen) als Ecken (12 Ecken) der Ringschaltung. Es können zum Beispiel 12 Dioden im Brückengleichrichter bei 6-phasiger Wicklungsanordnung oder sogar 18 Dioden im Brückengleichrichter bei einer 3-phasigen Wicklungsanordnung eingespart werden. Es wer- den nicht nur die Dioden eingespart, sondern auch der entsprechende Verschaltungsaufwand.

Es werden bei der Erfindung im Prinzip Wicklungsteilstränge genutzt. Diese Wicklungsteilstränge sind als Wicklungshalbstränge ausgeführt, d. h. zu jedem Wicklungshalbstrang existiert ein zweiter Wicklungshalbstrang mit gleicher elektrischer Phasenlage, der in den selben Nuten des Ständers untergebracht ist. Die Wicklungsteilstränge werden dazu benutzt, eine 12 eckige Ringschaltung zu realisieren. Es ist nämlich vorgesehen, die Phasenzahl des Generators zum Beispiel auf sechs zu erhöhen und diese Phasen aus Wicklungsteilsträngen auszuführen und damit eine 12-eckige gleichseitige Ringschaltung zu realisieren.

In einer vorteilhaften Weiterbildung der erfindungsgemäßen Wicklungsteilstrangverschaltung ist vorgesehen, dass Abgangsdrähte der Wicklungsteilstränge unmittelbar auf einem Ständer-Wickelkopf verschaltet sind. Eine Wickelkopfverschaltung ist kostengünstig umzusetzen und kann auch automatisiert erfolgen.

Besonders geeignet ist der Generator für Kraftfahrzeuge, wobei die Generator-Nennspannung etwa der Bordnetzspannung eines Kraftfahrzeuges, insbesondere etwa 14 Volt, entspricht. Die Generatorkennlinie ist entsprechend angepasst.

Besonders vorteilhaft ist es, wenn die einzelnen Wicklungsteilstränge aus durchgehendem Draht gebildet sind. Diese Lösung ist erheblich kostengünstiger als eine Lösung mit segmentierten Leitern.

Um das Bauvolumen des Generators zu optimieren, ist es zweckmä-βig, dass der Ständemutfüllfaktor > 50% beträgt. Unter Ständemutfüllfaktor wird hierbei die elektrisch leitfähige Querschnittsfläche der Leiter einer Nut im Verhältnis zur gesamten Nutfläche verstanden. Durch den hohen Nutfüllfaktor erhöht sich der Wirkungsgrad des Generators. Das Magnetgeräusch wird verbessert, da die Steifigkeit der Wicklung mit Erhöhung des Füllfaktors zunimmt.

### Zeichnungen

Die Erfindung wird nachfolgend in zwei Ausführungsbeispielen anhand der zugehörigen Zeichnungen näher erläutert. Es zeigen:
- Figur 1: einen Längsschnitt durch einen Wechselstromgenerator für Kraftfahrzeuge mit einem Klauenpolrotor,
- Fig. 2: eine Darstellung einer 12-eckigen Ringverschaltung eines Ständers eines erfindungsgemäßen Generators, der 6-phasig ausgeführt ist,
- Fig. 3: eine Darstellung einer 12-eckigen Ringverschaltung eines Ständers eines erfindungsgemäßen Generators, der 3-phasig ausgeführt ist,
- Fig. 4: die 12-eckige Ringverschaltung gemäß Fig. 2 mit einer Brückenschaltung für 6 Stränge bzw. mit 12 Gleichrichterdioden,
- Fig. 5: die 12-eckige Ringverschaltung gemäß Fig. 3 mit einer Brückenschaltung für 3 Stränge bzw. mit 6 Gleichrichterdioden,
- Fig. 6: ein Spannungsdiagramm zur Schaltung in Fig. 4, und
- Fig. 7: ein Spannungsdiagramm zur Schaltung in Fig. 5.
- Fig. 8: zeigt eine Ansicht eines Ausschnittes eines Wicklungsteilstranges

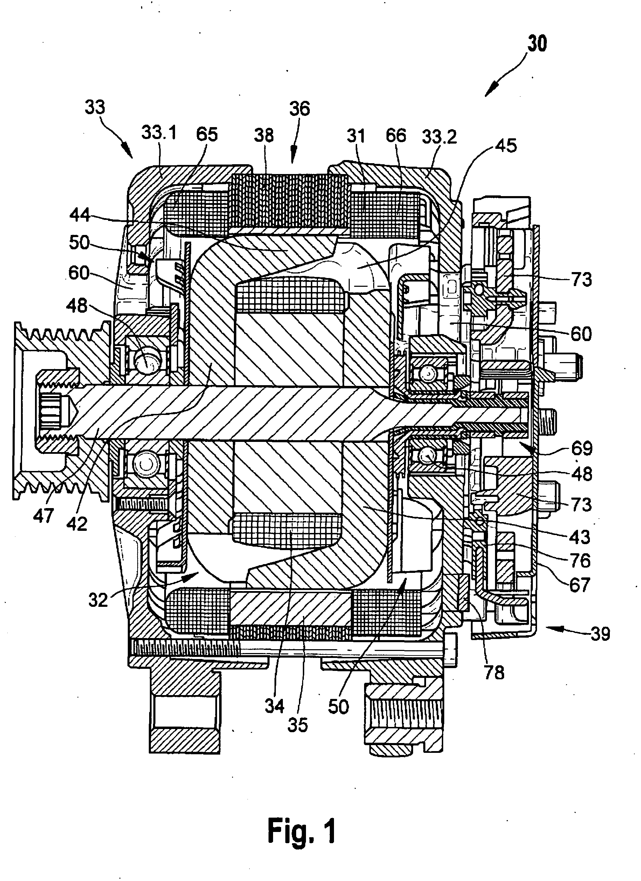

In Fig. 1 ist ein Schnitt durch eine elektrische Maschine in der Ausführung als Wechselstromgenerator 30 für Kraftfahrzeuge dargestellt. Dieser weist unter anderem ein zweiteiliges Gehäuse 33 auf, das aus einem ersten Lagerschild 33.1 und einem zweiten Lagerschild 33.2 besteht. Das Lagerschild 33.1 und das Lagerschild 33.2 nehmen in sich einen Ständer 36 auf, mit einem kreisringförmigen Blechpaket 38, in dessen nach innen offene und sich axial erstreckende Nuten 35 eine Ständerwicklung 31 eingelegt ist. Der ringförmige Ständer 36 umgibt mit seiner radial nach innen gerichteten Oberfläche einen elektromagnetisch erregten Läufer 32, der als Klauenpolläufer ausgebildet ist. Der Läufer 32 besteht unter anderem aus zwei Klauenpolplatinen 42 und 43, an deren Außenumfang sich jeweils in axialer Richtung erstreckende Klauenpolfinger 44 und 45 angeordnet sind. Beide Klauenpolplatinen 42 und 43 sind im Läufer 32 derart angeordnet, dass ihre sich in axialer Richtung erstreckenden Klauenpolfinger 44, 45 am Umfang des Rotors 32 einander als Nord-und Süd-Pole abwechseln. Es ergeben sich dadurch magnetisch erforderliche Klauenpolzwischenräume zwischen den gegensinnig magnetisierten Klauenpolfingern 44 und 45, welche wegen der sich zu ihrem freien Enden hin verjüngenden Klauenpolfinger 44 und 45 leicht schräg zur Maschinenachse verlaufen. Für die folgende Beschreibung der Erfindung ist dieser Verlauf vereinfacht als axial bezeichnet. Der Läufer 32 ist mittels einer Welle 47 und je einem auf je einer Seite befindlichen Wälzlager 48 in den jeweiligen Lagerschilden 33.1 beziehungsweise 33.2 drehbar gelagert. Er weist zwei axiale Stirnflächen auf, an denen jeweils ein Lüfter 50 befestigt ist. Diese Lüfter 50 bestehen im Wesentlichen aus einem plattenförmigen beziehungsweise scheibenförmigen Abschnitt, von dem Lüfterschaufeln in bekannter Weise ausgehen. Diese Lüfter 50 dienen dazu, über Öffnungen 60 in den Lagerschilden 33.1 und 33.2 einen Luftaustausch zwischen der Außenseite und dem Innenraum der elektrischen Maschine 30 zu ermöglichen. Dazu sind die Öffnungen 60 an den axialen Enden der Lagerschilde 33.1 und 33.2 vorgesehen, über die mittels der Lüfter 50 Kühlluft in den Innenraum der elektrischen Maschine 30 eingesaugt wird. Diese Kühlluft wird durch die Rotation der Lüfter 50 radial nach außen beschleunigt, so dass sie durch kühlluftdurchlässige Wickelköpfe 65 auf der Antriebsseite und 66 auf der Elektronikseite (Schleifring-, Bürsten- oder Gleichrichterseite) hindurchtreten kann. Durch diesen Effekt werden die Wickelköpfe gekühlt. Die Kühlluft nimmt nach dem Hindurchtreten durch die Wickelköpfe, beziehungsweise nach dem Umströmen dieser Wickelköpfe einen Weg radial nach außen durch nicht dargestellte Öffnungen zwischen angedeuteten Stegen. In Figur 1 auf der rechten Seite befindet sich eine Schutzkappe 67, die verschiedene Bauteile vor Umgebungseinflüssen schützt. So deckt diese Schutzkappe 67 beispielsweise eine Schleifringbaugruppe 69 ab, die eine Erregerwicklung 34 mit Erregerstrom versorgt. Um diese Schleifringbaugruppe 69 herum ist ein Kühlkörper 73 angeordnet, der hier als Pluskühlkörper wirkt. Als sogenannter Minuskühlkörper wirkt das Lagerschild 33.2. Zwischen dem Lagerschild 33.2 und dem Kühlkörper 73 ist eine Anschlussplatte 76 angeordnet, welche im Lagerschild 33.2 befestigte Minusdioden 78 und in dieser Darstellung nicht gezeigte Plusdioden eines Gleichrichters 39 im Kühlkörper 73 in Form einer Brückenschaltung miteinander verbindet.

Es ist vorgesehen, dass die Wickelköpfe 65, 66, die durch je einen näherungsweise radialen Kühlluftstrom kühlbar sind, der von zumindest an einem axialen Ende einer Klauenpolplatine 42, 43 angebrachten Lüfter 50 verursacht wird.

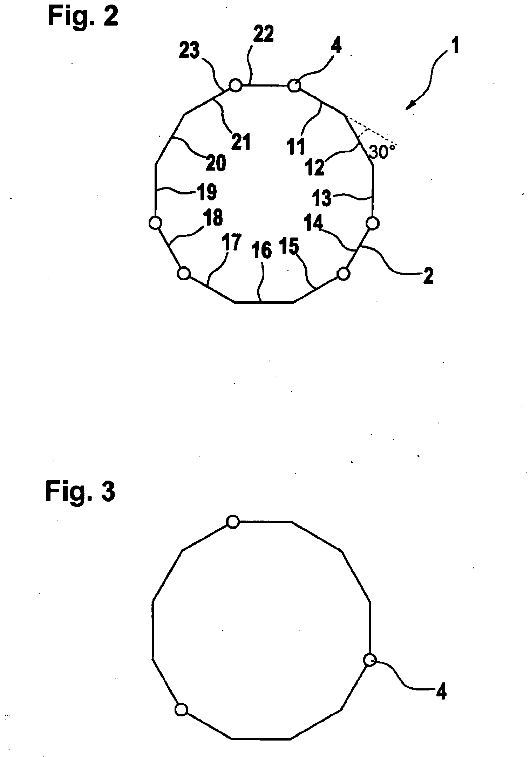

Fig. 2 zeigt eine Darstellung einer 12-eckigen Ringverschaltung 1 eines Ständers 36 eines erfindungsgemäßen Generators 30. Der Ständer 36 ist in bekannter Weise mit nicht gezeigten Wicklungsnuten 35 versehen. In den Wicklungsnuten 35 liegen Wicklungsstränge 10-21. Die Wicklungsteilstränge 10-21 liegen als Winklungshalbstränge vor, d.h. es sind jeweils zwei Wicklungsteilstränge 10,16; 11,17; 12,18; 13,19; 14,20; 15,21 mit annähernd identischer elektrischer Phasenlage in den gleichen Nuten eingelegt 35. Zur Herstellung dieser Konfiguration wird vorteilhafterweise ein Ständer 36 mit einer Anzahl von Nuten 35 verwendet, die der sechsfachen Anzahl an magnetischen Polen entspricht.

Der Generator 30 dient zur Bordnetz- und/oder Batterieversorgung eines Kraftfahrzeuges und ist im Ausführungsbeispiel gemäß Fig. 2 als 6-phasiger Generator ausgeführt. Die Ringverschaltung 1 umfasst zwölf Wicklungsteilstränge 10 - 21. Die Wicklungsteilstränge 10 - 21 sind in Reihe geschaltet, wobei das erste Ende 22 des ersten Wicklungsteilstranges 10 mit dem zweiten Ende 23 des letzten Wicklungsteilstränge 21 elektrisch verbunden ist. Der elektrische Winkel der Wicklungsteilstränge 10 - 21 zueinander beträgt elektrisch 30° oder einem Vielfachen von elektrisch 30°. Der elektrische Winkel zwischen zwei aufeinanderfolgenden Wicklungsteilsträhgen 10 - 21 der Ringschaltung 1 beträgt ca. 30°.

Es ist vorgesehen, dass die ersten Enden 22 und die zweiten Enden 23 der Wicklungsteilstränge 10 - 21 unmittelbar axial auf oder radial neben einem Wickelkopf 65, 66 des Generators verschaltet sind.

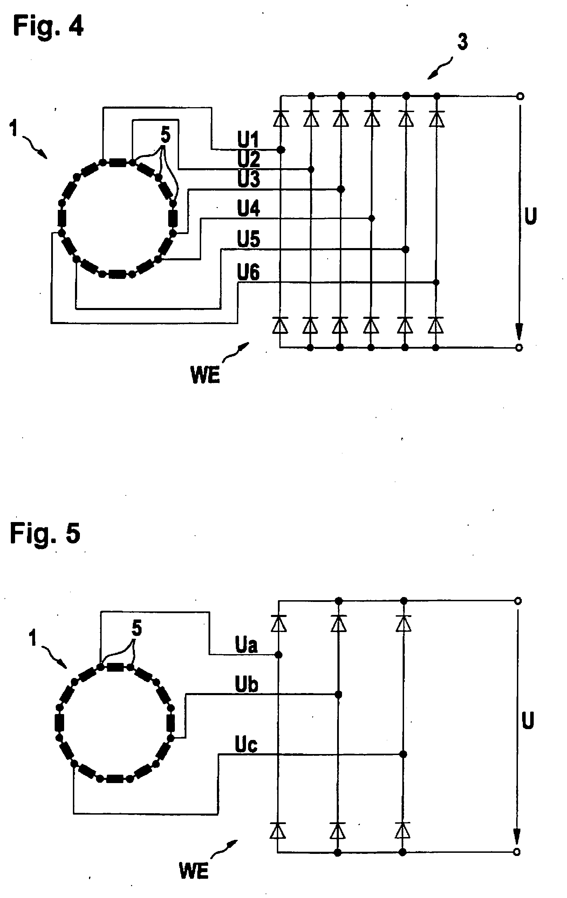

Fig. 4 zeigt eine zugehörige Verschaltung mit einer Drehstrombrückenschaltung 3, und zwar eine 6-phasige Verschaltung bzw. eine Schaltung mit sechs Wechselstromeingängen WE. Die Schaltung gemäß Fig. 2 hat sechs Abgriffe 4, die mit der Brückenschaltung gemäß Fig. 4 verbunden sind. Alle sechs Abgriffe 4 sind nicht gleichmäßig am Ring verteilt, wie in Fig. 2 zu sehen ist. Die Abgriffe 4 liegen an den Enden der Wicklungsabschnitte 10, 14 und 18. Die Wicklungsstränge 2 sind mit einer Brückenschaltung 3 (Fig. 4) verschaltet. Die Brücken- bzw. Gleichrichterschaltung wandelt die aus dem Drehfeld, der durch den bewegten Rotor entsteht, erzeugte mehrphasige Wechselspannung in eine Gleichspannung U. Die Gleichspannung U ist kompatibel mit der Bordnetzspannung.

Es ist somit eine elektrische Maschine, insbesondere Wechselstromgenerator für ein Kraftfahrzeug mit einem Läufer 32 und sich in axialer Richtung erstreckenden Klauenpolfingern 44, 45 vorgesehen, wobei sich die Klauenpolfinger 44, 45 am Umfang des Läufers 32 als Nord- und Süd-Pole abwechseln, mit einem Ständer 36, der einen Ständerkern 38 mit einer in Nuten 35 des Ständerkems 38 angeordneten Ständerwicklung 31 aufweist, wobei der Ständer 36 dem Läufer 32 gegenübersteht, und der Ständer 36 und der Läufer 32 von zwei Lagerschilden 33 unterstützt ist, mit einer ringspulenförmigen Erregerwicklung 34, die am Läufer 32 befestigt ist, wobei die Ständerwicklung 31 zwölf Wicklungsteilstränge 10 - 21 aufweist, wobei mindestens zwei Wicklungsteilstränge 10 - 21 die gleiche elektrische Phasenlage aufweisen und in den gleichen Nuten 35 des Ständer 36 liegen, wobei Wicklungsteilstränge 10 - 21 mit einem Phasenwinkel von elektrisch 30° miteinander in Reihe geschaltet sind und somit eine 12-eckige Ringschaltung 1 bilden, wobei die Anzahl der Wechselstromeingänge (WE) der Brückenschaltung 3 des Gleichrichters 39 kleiner ist als die Anzahl der Wicklungsteilstränge 10 - 21.

Ganz besonders ist eine elektrische Maschine vorgesehen, wonach die Anzahl der Ecken 12 und die Anzahl der Wechselstromeingänge (WE) der Brückenschaltung 3 des Gleichrichter drei ist.

Nach einer weiteren Ausgestaltung der Erfindung ist vorgesehen, dass die Anzahl der Ecken 12 und die Anzahl der Wechselstromeingänge (WE) der Brückenschaltung 3 des Gleichrichter sechs ist.

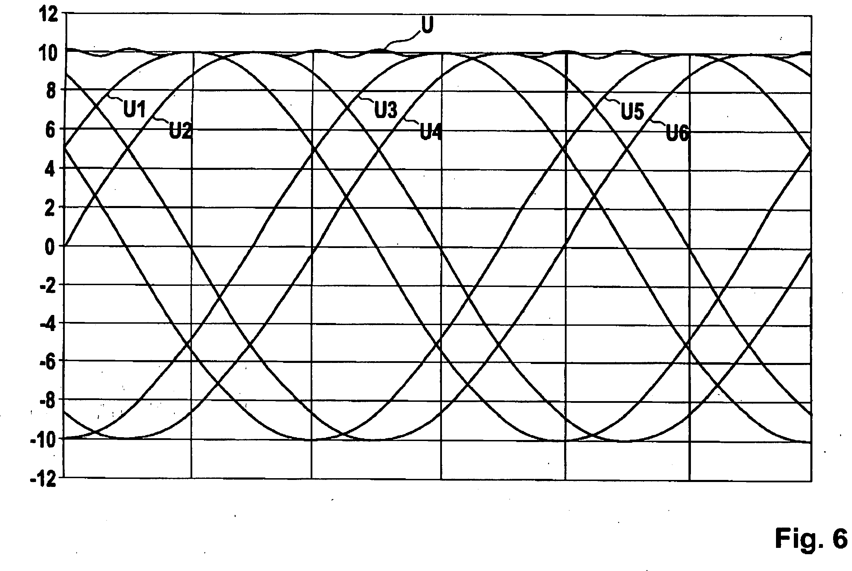

Fig. 6 zeigt ein Spannungsdiagramm (in Volt) der Schaltungsanordnung in Fig. 4. An den Abgriffen 4 werden Spannungen U1 - U6 induziert. Die Spannungen U1 und U2 sind wie die Spannungen U3, U4 und U5, U6 um 30° phasenverschoben. Die-Spannungen U1, U3 sind wie auch die Spannungen U3, U5 und U5, U1 um 120° phasenverschoben. Die Spannung U stellt die Brückenspannung. bzw. eine pulsierende Gleichspannung dar. Die Welligkeit ist jedoch gering, wodurch ein Geräuschverhalten günstig ist und auch ein guter Wirkungsgrad gegeben ist.

Fig. 3 zeigt eine Darstellung einer 12-eckigen Ringverschaltung 1 eines Ständers einer Variante des erfindungsgemäßen Generators. Fig. 5 zeigt eine zugehörige Verschaltung mit einer Drehstrombrückenschaltung, und zwar eine 3-phasige Verschaltung bzw. eine Schaltung mit drei Wechselstromeingängen WE.

Die Schaltung gemäß Fig. 3 hat nur drei Abgriffe 4, die mit der Brückenschaltung gemäß Fig. 5 verbunden sind. Alle drei Abgriffe 4 sind gleichmäßig verteilt. Die Schaltung gemäß Fig. 4 hat wegen der höheren Diodenzahl eine geringere Spannungswelligkeit als die der Fig. 5.

Vorzugsweise ist jede Phase des Generators (Fig. 1 und 2) aus einzelnen Leitersegmenten aufgebaut ist, wobei die Leitersegmente insbesondere U-förmig sind.

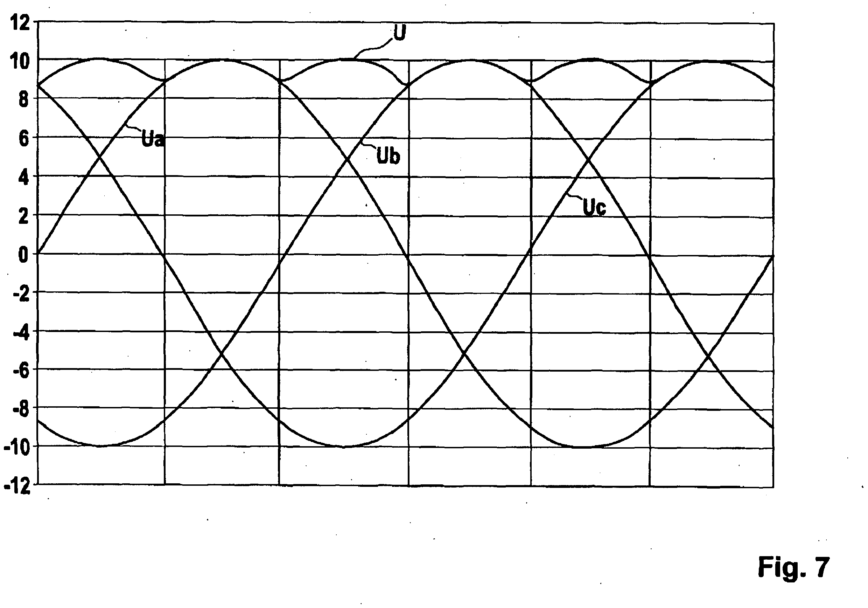

Fig. 7 zeigt ein Spannungsdiagramm zur Schaltung in Fig. 5 mit der Brückenspannung U und den Spannungen an den Abgriffen 4, und zwar Ua, Ub und Uc. Die Spannungen Ua, Ub und Uc sind um 120° phasenverschoben.

Die Fig. 4 und 5 zeigen außerdem die Verschaltungspunkte 5 der Abgangssdrähte der Wicklungsstränge. Diese werden insbesondere unmittelbar auf einem Ständer-Wickelkopf verschaltet.

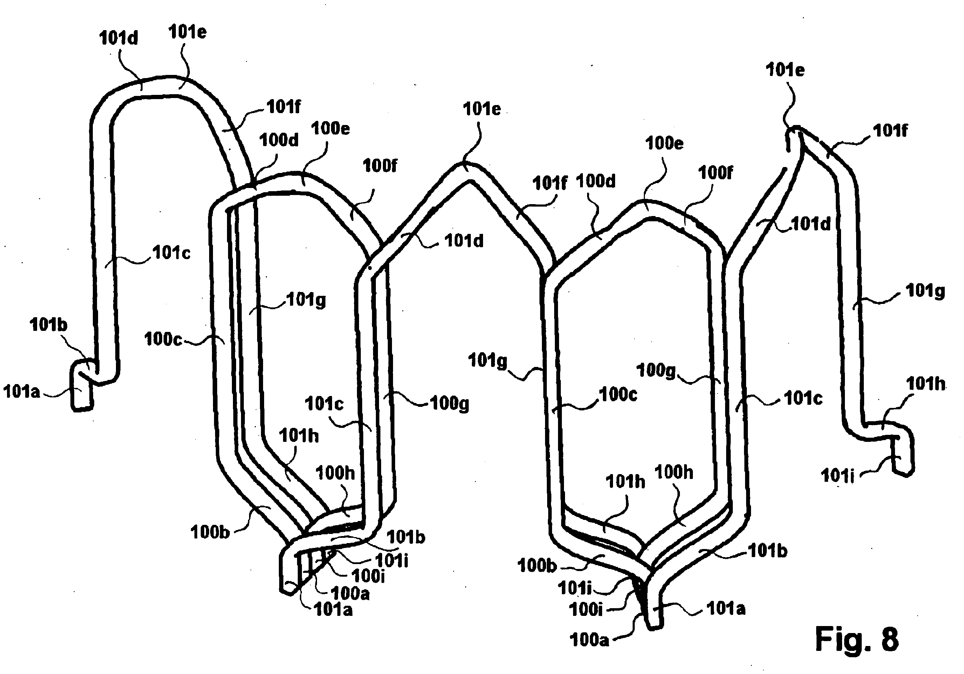

In Fig. 8 ist als Realisierungsbeispiel der Ausschnitt einer segmentierten Wickluägsteilstranges dargestellt, der aus vier miteinander verbundenen Leitersegmenten besteht Die dargestellte Wicklung ist mit vier Leitern in jeder Nut dargestellt, wobei die schmalen Seiten der Leiter einander gegenüberliegen und die breiten Seiten der Leiter der Nutwand gegenüberliegen. Die Leiter sind in der Nut in vier radialen Nutlagen angeordnet, wobei die äußerste Nutlage als Nutlage 1 und die innerste Nutlage als 4 bezeichnet wird.

Jedes Leitersegment 100,101 besteht aus zumindest aus einem im wesentlichen axial ausgerichteten ersten Verbindungsabschnitt 100a, 101a, der zur Kontaktierung zweier radial benachbarter Verbindungsabschnitte 100a,101a,100i,101i dient. Diese Kontaktierung kann zum Beispiel durch schweißen, löten oder andere Verfahren zur elektrischen Kontaktierung erfolgen. Der erste Verbindungsabschnitt 100a, 101a geht über in einen ersten geneigten Abschnitt 100b, 101b, der den ersten Verbindungsabschnitt 100a,101a mit einem ersten axial ausgerichteten, in einer Nut 35 einliegenden Abschnitt 100c,101c des Leitersegmentes 10,101 verbindet. Der in der Nut einliegende, erste Abschnitt 100c,101c geht über in einen zweiten geneigten Abschnitt 100d, 101 d der übergeht in einen Biegeabschnitt 100e, 101e. Vom Biegeabschnitt geht ein dritter geneigter Abschnitt 100f, 101f ab und verbindet den Biegeabschnitt 100e, 101e mit dem einem zweiten in der Nut 35 einliegenden Abschnitt 100g,101g. Der zweite in der Nut 35 einliegende Abschnitt 100g, 101g ist mit einem vierten geneigten Abschnitt 100h,101h verbunden der in einen zweiten, im wesentlichen axial ausgerichteten Verbindungsabschnitt 100i, 101i mündet. Es ist hier prinzipiell auch vorstellbar, dass das Leitersegment aus mehren Windungen aufgebaut wird, d.h. mehrere auf beiden axialen Seiten des Ständerpaketes angeordnete Biegeabschnitte 100e,100e gibt. Ein Leitersegment ist üblicherweise in zwei radiale Lagen unterteilt, wobei der erste Verbindungsabschnitt 100a, 101a, der erste geneigte Abschnitt 100b, 101b, der erste gerade, in der Nut einliegende Abschnitt 100c,101c und der zweite geneigte Abschnitt 100d, 101d in der selben radialen Schicht liegen. Der dritte geneigte Abschnitt 100f,101f, der zweite in der Nut einliegende Abschnitt 100g,101g, der vierte geneigte Abschnitt 100h,100h und der zweite Verbindungsabschnitt liegen in einer zweiten radialen Schicht. Der Biegeabschnitt verbindet die Abschnitte der beiden radialen Ebenen.

Die hier als Beispiel aufgeführte Wicklung eines Ständerstranges ist aus zwei verschiedenen Leitersegmenten ausgeführt, einem innenliegenden Leitersegment 100, der in den Nutlagen 2,und 3 einliegt, ein äußeren Leitersegment 101, der ein innere Leitersegment 100 auf dem elektronikseitigen Wickelkopf 66 umschließt und der in den Nutlagen 1 und 4 einliegt

Der in Fig. 8 dargestellte Abschnitt eines Wicklungsteilstranges ist wie folgt verbunden. Das erste äußere Leitersegment 101 liegt mit einem ersten geraden Abschnitt 101c in Nutlage 1, mit seinem zweiten geraden Abschnitt in Nutposition 4 und ist mit seinem zweiten Verbindungsabschnitt 101i mit dem zweiten Verbindungsabschnitt 100i eines ersten inneren Leitersegmentes 100 verbunden. Der zweite Verbindungsabschnitt des ersten inneren Leitersegments ist mit einem zweiten geraden in der Nut einliegenden Abschnitt 100g in der Nutlage 3, mit einem ersten in der Nut einliegenden Abschnitt 100c in der Nutlage 2 des innere Leitersegment und einem ersten Verbindungsabschnitt des inneren Leitersegment 100a verbunden. Der erste Verbindungsabschnitt des ersten inneren Leitersegment 100a ist mit dem zweiten äußeren Leitersegment über den ersten Verbindungsabschnitt 101 a verbunden, der wiederum mit einem ersten geraden in einer Nut einliegenden Abschnitt 101c in Nutlage 1, einem zweiten geraden Abschnitt 101g in der Nutlage 4 und einem zweiten Verbindungsabschnitt 101 i verbunden ist.

Der zweite Verbindungsabschnitt des zweiten äußeren Leitersegment 101g ist mit dem zweiten inneren Leitersegment über den zweiten Verbindungsabschnitt 100i verbunden, der wiederum mit einem zweiten geraden in einer Nut einliegenden Abschnitt 100g in Nutlage 3, einem ersten geraden Abschnitt 100c in der Nutlage 2 und einem ersten Verbindungsabschnitt 100a verbunden ist.

Die noch fehlenden Abschnitte des Wicklungsteilstranges ergibt sich durch Fortsetzung des dargestellten Schemas, solange bis der Wicklungsteilstrang eine volle Umlauf innerhalb der Nuten des Ständers beschreibt. Der zweite Wicklungsteilstrang mit der nahezu gleichen elektrischen Phasenlage ergibt sich durch Übertragen dieses Schemas auf um eine Polteilung versetzte Nuten.

Durch die Abfolge der inneren und äußeren Leitersegmente wird eine Schleifenwicklung gebildet. Der Aufbau der Leitersegmentwicklung ist aber nicht auf dieses Beispiel begrenzt. Es ist ebenso möglich eine Leitersegmentwicklung mit zwei identischen in radialer Richtung nebeneinander liegenden Leitersegmenten aufzubauen, die dann Nutlage 1 und 2, bzw. 3 und 4 verbinden und dann entsprechend eine Wellenwicklung bilden.

Der gezeigte Ausschnitt einer Ständerwicklung 31 für einen Ständer 36 mit 96 Nuten 15, 12 Wicklungsteilsträngen und einem elektrisch erregten Läufer 32 mit 16 Polen. Die Wicklungen der anderen Wicklungsteilstränge sind gemäß Figur 8 ausgeführt. Sie sind nicht auf diese Ausführung beschränkt, es ist ebenso möglich eine vergleichbare Wicklung für einen Ständer mit 72 Nuten 15, 12 Wicklungsteilsträngen und 3 oder 6 Phasen und einem elektrisch erregten Läufer 20 mit 12 Polen herzustellen.

Bei der Herstellung von Leitersegmenten wird von einem Rund- oder Profildraht ausgegangen, der zu erst in eine U oder V-förmige Vorform bzw. Vorstufe gebracht wird. Bei dieser Vorform sind die radialen Abstände der beiden in den Nuten einliegenden Abschnitte schon gegeben, allerdings haben diese Abschnitte keinen Abstand in Umfangsrichtung. Dieser Abstand wird durch Nutlagen weises verdrehen der Vorstufe des Leitersegmentes in Umfangsrichtung hergestellt. Die hieraus gewonnene zweite Vorstufe des Leitersegmentes wird in einrundes Ständerblechpaket axial eingeschoben. Um die Wicklung zu vervollständigen werden die Verbindungsabschnitte Nutlagen aufeinander zu gebogen und dann miteinander verbunden, so dass ein elektrischer Kontakt zwischen den jeweiligen Verbindungsabschnitten entsteht.

Es ist vorgesehen, dass jeder Wicklungsteilstrang aus zwei unterschiedlichen Leitersegmenten aufgebaut wird, jede Nut 35 vier Nutlagen aufweist und die vier in einer Nut einliegenden Abschnitte der Leitersegmente mit der kurzen Seite ihres Querschnittes einander gegenüberliegen.

Die Enden der Wicklungsteilstränge kommen bevorzugt aus den Nuten, die auf 80% des Ständerumfangs verteilt sind. Die Enden der ersten Wicklungsteilstränge 10,16 kommen bevorzugt aus den Nuten eins und sieben, die Enden der zweiten Wicklungsteilstränge 11,17 kommen bevorzugt aus den Nuten fünfzig und sechsundfünfzig, die Enden der dritten Wicklungsteilstränge 12,18 kommen bevorzugt aus den Nuten neun und fünfzehn, die Enden der vierten Wicklungsteilstränge 13,19 kommen bevorzugt aus den Nuten achtundfünfzig und vierundsechzig, die Enden der fünften Wicklungsteilstränge 14,20 kommen bevorzugt aus den Nuten neunundzwanzig und fünfunddreißig und die Enden der sechsten Wicklungsteilstränge 12,18 kommen bevorzugt aus den Nuten dreißig und sechsunddreißig. Die ersten Enden 22 und zweite Enden 23 der Wicklungsteilstränge 10-21 weisen in Umfangsrichtung unregelmäßige Abstände auf und sind dabei auf einen Abschnitt, der kleiner ist als 80% des Ständerumfangs beschränkt.

Grundsätzlich können die einzelnen Wicklungsstränge aus einer einzigen gewickelten Ständerwicklung aus durchgehendem Draht gebildet sein.

Die 6-Phasen-Ausführung (Fig. 4) hat den Vorteil geringer magnetischer Geräusche und einer geringen Spannungswelligkeit der Gleichspannung. Die 3-Phasen-Ausführung (Fig. 5) hat dagegen den Vorteil geringerer Kosten durch Einsparung von sechs Dioden gegenüber der Lösung gemäß Fig. 4.

z gibt die Anzahl an Leitern an, die in einer Nut einliegen. Die Leiterzahl z des erfindungsgemäßen Generators liegt vorzugsweise im Bereich 2 <= z <= 10, insbesondere bei 4, wegen einer Auslegung für eine Spannung von 14 Volt (Bordnetz).

## Patentansprüche

1. Elektrische Maschine, insbesondere Wechselstromgenerator für ein Kraftfahrzeug, mit einem Läufer (32) und einem Ständer (36), der einen Ständerkern (38) mit einer in Nuten (35) des Ständerkerns (38) angeordneten Ständerwicklung (31) aufweist, wobei der Ständer (36) dem Läufer (32) gegenübersteht, wobei der Ständer (36) und der Läufer (32) von zwei Lagerschilden (33) unterstützt ist, mit einer ringspulenförmigen Erregerwicklung (34), die am Läufer (32) befestigt ist, wobei die Ständerwicklung (31) zwölf Wicklungsteilstränge (10-21) aufweist, wobei mindestens zwei Wicklungsteilstränge (10-21) die gleiche elektrische Phasenlage aufweisen und in den gleichen Nuten (35) des Ständer (36) liegen, wobei Wicklungsteilstränge (10-21) mit einem Phasenwinkel von elektrisch 30° miteinander in Reihe geschaltet sind und somit eine 12-eckige Ringschaltung (1) bilden, **dadurch gekennzeichnet, dass** sich in axialer Richtung erstreckende Klauenpolfinger (44, 45), die sich am Umfang des Läufers (32) als Nord- und Süd-Pole abwechseln, vorgesehen sind, und dass die Anzahl von Wechselstromeingängen (WE) einer Brückenschaltung (3) eines mit der Ständerwicklung (31) verschalteten Gleichrichters (39) kleiner ist als die Anzahl der Wicklungsteilstränge (10-21).

2. Elektrische Maschine nach Anspruch 1, **dadurch gekennzeichnet, dass** die Ständerwicklung (31) Wickelköpfe (65, 66) aufweist, die durch je einen näherungsweise radialen Kühlluftstrom kühlbar sind, der von zumindest an einem axialen Ende einer Klauenpolplatine (42, 43) angebrachten Lüfter (50) verursacht wird.

3. Elektrische Maschine nach Anspruch 1 oder 2, **dadurch gekennzeichnet, dass** die Anzahl an Nuten (35) der sechsfachen Anzahl an Polen des Läufers (32) entspricht.

4. Elektrische Maschine nach einem der vorhergehenden Ansprüche, **dadurch gekennzeichnet, dass** die ersten Enden (22) und die zweiten Enden (23) der Wicklungsteilstränge (10-21) unmittelbar axial auf oder radial neben einem Wickelkopf (65, 66) des Generators verschaltet sind.

5. Elektrische Maschine nach einem der vorhergehenden Ansprüche, **dadurch gekennzeichnet, dass** die Generator- Nennspannung die Bordnetzspannung eines Kraftfahrzeuges, insbesondere etwa 14 Volt beträgt.

6. Elektrische Maschine nach einem der vorhergehenden Ansprüche, **gekennzeichnet durch** einen Ständemutfüllfaktor > 50%.

7. Elektrische Maschine nach einem der vorhergehenden Ansprüche, wobei die Anzahl der Ecken 12 und die Anzahl der Wechselstromeingänge (WE) der Brückenschaltung (3) des Gleichrichters drei ist.

8. Elektrische Maschine nach einem der vorhergehenden Ansprüche 1 bis 6, wobei die Anzahl der Ecken 12 und die Anzahl der Wechselstromeingänge (WE) der Brückenschaltung des Gleichrichters (3) sechs ist.

9. Elektrische Maschine nach einem der vorhergehenden Ansprüche, wobei jeder Wicklungsteilstrang aus einzelnen Leitersegmenten aufgebaut ist.

10. Elektrische Maschine, nach Anspruch 9, wobei der Wicklungsteilstrang aus zwei unterschiedlichen Leitersegmenten aufgebaut wird, jede Nut vier Nutlagen aufweist und die vier in eine Nute einliegenden Abschnitte der Leitersegmente mit der kurzen Seite ihres Querschnittes einander gegenüberliegen.

11. Elektrische Maschine nach einem der vorhergehenden Ansprüche, wobei die Leitersegmente aus einer U-förmigen beziehungsweise V-förmigen Vorstufe hergestellt sind.

12. Elektrische Maschine nach einem der vorhergehenden Ansprüche, **dadurch gekennzeichnet, dass** erste Enden (22) und zweite Enden (23) der Wicklungsteilstränge (10-21) in Umfangsrichtung unregelmäßige Abstände aufweisen und dabei auf ein Abschnitt, der kleiner ist als 80% des Ständerumfangs beschränkt sind.

## Claims

1. Electrical machine, in particular alternator for a motor vehicle, having a rotor (32) and a stator (36) which has a stator core (38) with a stator winding (31) which is arranged in slots (35) in the stator core (38), with the stator (36) being situated opposite the rotor (32), with the stator (36) and the rotor (32) being supported by two end plates (33), having a field winding (34) which is in the form of an annular coil and is attached to the rotor (32), with the stator winding (31) having twelve partial winding sections (10-21), with at least two partial winding sections (10-21) having the same electrical phase position and being situated in the same slots (35) in the stator (36), with partial winding sections (10-21) being connected to one another in series with a phase angle of 30° electrical and therefore forming a dodecagonal connection (1), **characterized in that** claw-pole fingers (44, 45) which extend in the axial direction and alternate as north and south poles over the circumference of the rotor (32) are provided, and **in that** the number of AC inputs (WE) to a bridge circuit (3) of a rectifier (39) which is connected to the stator winding (31) is lower than the number of partial winding sections (10-21).

2. Electrical machine according to Claim 1, **characterized in that** the stator winding (31) has winding heads (65, 66) which can be cooled by in each case one approximately radial cooling-air stream which is created by at least fans (50) which are fitted to an axial end of a claw-pole board (42, 43).

3. Electrical machine according to Claim 1 or 2, **characterized in that** the number of slots (35) corresponds to six times the number of poles of the rotor (32).

4. Electrical machine according to one of the preceding claims, **characterized in that** the first ends (22) and the second ends (23) of the partial winding sections (10-21) are connected directly axially on or radially next to a winding head (65, 66) of the generator.

5. Electrical machine according to one of the preceding claims, **characterized in that** the rated voltage of the generator is the on-board electrical system voltage of a motor vehicle, in particular approximately 14 volts.

6. Electrical machine according to one of the preceding claims, **characterized by** a stator slot filling factor of > 50%.

7. Electrical machine according to one of the preceding claims, with the number of corners being 12 and the number of AC inputs (WE) to the bridge circuit (3) of the rectifier being three.

8. Electrical machine according to one of the preceding Claims 1 to 6, with the number of corners being 12 and the number of AC inputs (WE) to the bridge circuit (3) of the rectifier being six.

9. Electrical machine according to one of the preceding claims, with each partial winding section being made up of individual conductor segments.

10. Electrical machine according to Claim 9, with the partial winding section being made up of two different conductor segments, each slot having four slot layers, and the four sections of the conductor segments, which sections are situated in a slot, being situated opposite one another by way of the short side of their cross section.

11. Electrical machine according to one of the preceding claims, with the conductor segments being produced from a U-shaped or V-shaped precursor.

12. Electrical machine according to one of the preceding claims, **characterized in that** first ends (22) and second ends (23) of the partial winding sections (10-21) are at irregular distances in the circumferential direction and, in the process, are restricted to a section which is smaller than 80% of the stator circumference.

## Revendications

1. Machine électrique, en particulier générateur de courant alternatif pour véhicule automobile, dotée
d'un induit (32) et d'un stator (36) qui présente un noyau de stator (38) doté d'un enroulement de stator (31) disposé dans des rainures (35) du noyau de stator (38),
le stator (36) étant situé face à l'induit (32),
le stator (36) et l'induit (32) étant soutenus par deux plaques de palier (33),
d'un enroulement d'excitateur (34) en forme de bobine annulaire, fixé sur l'induit (32),
l'enroulement de stator (31) présentant douze barres partielles d'enroulement (10-21),
au moins deux barres partielles d'enroulement (10, 21) présentant la même phase électrique et étant situées dans les mêmes rainures (35) du stator (36),
des barres partielles d'enroulement (10-21) déphasées électriquement de 30° les unes par rapport aux autres étant raccordées en série et formant ainsi un circuit annulaire (1) à douze sommets,
**caractérisée en ce que**
des doigts polaires à griffe (44, 45) qui s'étendent dans la direction axiale et qui alternent en tant que pôle nord et pôle sud à la périphérie de l'induit (32) sont prévus et
**en ce que** le nombre des entrées (WE) de courant alternatif d'un circuit de pont (3) d'un redresseur (39) raccordé à l'enroulement de stator (31) est plus petit que le nombre des barreaux partiels d'enroulement (10-21).

2. Machine électrique selon la revendication 1, **caractérisée en ce que** l'enroulement de stator (31) présente des têtes d'enroulement (65, 66) qui sont toutes refroidies par un écoulement approximativement radial d'air de refroidissement qui est provoqué par au moins un ventilateur (50) installé à une extrémité axiale d'une plaque polaire (42, 43) à griffes.

3. Machine électrique selon les revendications 1 ou 2, **caractérisée en ce que** le nombre de rainures (35) correspond à six fois le nombre des pôles de l'induit (32).

4. Machine électrique selon l'une des revendications précédentes, **caractérisée en ce que** les premières extrémités (22) et les deuxièmes extrémités (23) des barres partielles d'enroulement (10-21) sont raccordées directement et axialement à une tête d'enroulement (65, 66) du générateur ou radialement à côté d'une telle tête.

5. Machine électrique selon l'une des revendications précédentes, **caractérisée en ce que** la tension nominale du générateur correspond à la tension du réseau de bord d'un véhicule automobile et en particulier à environ 14 volts.

6. Machine électrique selon l'une des revendications précédentes, **caractérisée par** un facteur de remplissage des rainures du stator de > 50 %.

7. Machine électrique selon l'une des revendications précédentes, dans laquelle le nombre des sommets est de 12 et le nombre des entrées (WE) de courant alternatif du circuit de pont (3) du redresseur est de trois.

8. Machine électrique selon l'une des revendications 1 à 6 qui précèdent, dans laquelle le nombre des sommets est de 12 et le nombre des entrées (WE) de courant alternatif du circuit de pont (3) du redresseur est de six.

9. Machine électrique selon l'une des revendications précédentes, dans laquelle chaque barre partielle d'enroulement est constituée de segments de conducteur distincts.

10. Machine électrique selon la revendication 9, dans laquelle la barre partielle d'enroulement est constituée de deux segments de conducteur différents, chaque rainure présentant quatre positions de rainures et les quatre sections des segments de conducteur placées dans une rainure étant situées l'un en face de l'autre par le court côté de leur section transversale.

11. Machine électrique selon l'une des revendications précédentes, dans laquelle les segments de conducteur sont réalisés à partir d'une ébauche en forme de U ou en forme de V.

12. Machine électrique selon l'une des revendications précédentes, **caractérisée en ce que** des premières extrémités (22) et des deuxièmes extrémités (23) des barres partielles d'enroulement (10-21) présentent des distances non uniformes dans la direction périphérique et sont ainsi restreintes à une partie de la périphérie du stator inférieure à 80 %.
